# EUROPEAN PATENT SPECIFICATION

(11) **EP 3 434 805 B1**
(45) Date of publication and mention of the grant of the patent: **02.09.2020**
(21) Application number: 18183060.5
(22) Date of filing: 12.07.2018
(51) Int. Cl.: C23C 18/12, B05D 7/14, F16B 33/00, F16B 39/22, C23C 18/04, F16B 35/04

(54) **PROCESS FOR ADHERING SOLID LUBRICANT TO SURFACE OF INTERFERENCE FIT FASTENER**
VERFAHREN ZUM HAFTEN VON FESTSCHMIERSTOFF AN DER OBERFLÄCHE EINES PRESSSITZBEFESTIGERS
PROCÉDÉ POUR COLLER UN LUBRIFIANT SOLIDE À LA SURFACE D'UNE FIXATION À AJUSTEMENT SERRÉ

(30) Priority: 28.07.2017 US 201715663320
(43) Date of publication of application: 30.01.2019
(73) Proprietor: The Boeing Company, Chicago, IL 60606-1596 (US)
(72) Inventor: SIMPSON, Blake A., Chicago, IL 60606 (US); SISCO, Tanni, Chicago, IL 60606 (US)
(74) Representative: Harris, Jennifer Lucy

(56) References cited:
- EP-A1- 2 517 866
- EP-A1- 2 947 015
- DE-A1-102009 023 402
- US-A- 5 858 133
- US-B1- 6 733 837

## Description

### BACKGROUND

This disclosure generally relates to the use of fasteners to secure two or more structures or workpieces (at least one of which is made of composite material, such as fiber-reinforced plastic) in a manner such that high interference fit of the fasteners within their respective holes in the structures is achieved. In particular, this disclosure relates to interference fit fastener assemblies comprising a bolt or a pin and a mating part (e.g., a nut or a collar) and not including a sleeve surrounding the fastener.

Normal practice for fastening multiple layers of material together is to clamp up the layers, drill holes, and then insert some type of fastener into the holes and thereby secure the layers together. The fasteners are usually inserted in a net or clearance fit in the receiving holes in the layers. For many applications, this will be sufficient. However, when the assembled structure is subjected to cyclic loading, the looseness of the fit of the fasteners within their holes will result in continual working of the fasteners within their holes. This in turn may lead to fretting and fatigue issues with either the fastener or the surrounding region of the layers adjacent a particular hole.

To solve the foregoing problems, it is known that the utilization of an interference fit of the fastener (hereinafter "interference fit fastener") in the hole can effectively prevent the majority of this fretting due to cyclic loading of the assembled structure. High interference creates a tighter joint that reduces movement, resulting in enhanced fatigue performance. Additionally, interference fit fasteners can help ensure safe dissipation of electrical current as part of a lightning strike protection scheme by minimizing arcing across gaps caused by non-interference fit fasteners. In many cases an oversized fastener will be driven directly into the receiving hole in the layers. Typically, some lubricant is applied to the fastener and hole before assembly to reduce the tendency toward abrasion as the fastener is pushed into the hole. For example, some portion of the fastener may be coated with a material having a lubricity greater than that of the surface of the portion of the interference fit fastener that contacts the hole. The coating could, for example, be aluminum pigment coating, solid interface film lubricant or metallic plating (cadmium plate, zinc-nickel, etc.). This coating could have an additional lubricant such as cetyl alcohol applied thereon.

Aluminum pigment coatings (for example, HI-KOTE™ from LISI Aerospace, Torrance, CA, U.S.A. or INCOTEC 8G™ from Innovative Coatings Technology Corp., Mojave, CA, U.S.A.) typically adhere to fasteners made of titanium alloy or corrosion-resistant steel with less than optimal adhesive strength, which can result in corrosion. Prior to applying an aluminum pigmented coating to a portion of the surface of an interference fit fastener, the following pretreatments are used: (1) grit blasting with aluminum mesh; and (2) etching with acid. Although grit blasting promotes acceptable adhesion, the surface roughness of the fastener is high. As a result, when installing (pushing or riveting) fasteners into interference fit holes, the coating tends to be removed due to the less than optimal adhesive strength as the coated surface comes in contact with the hole. Since the bare surface has been grit blasted, the surface roughness creates friction, resulting in higher insertion loads and potential damage to the structure. Although the parts that are etched have a smoother surface roughness condition than grit- blasted parts, these parts do not have adequate adhesion characteristics and do not meet performance targets.

In view of the foregoing, a process that increases the adhesive strength of solid lubricant adhered to portions of the surface of an interference fit fastener subject to installation force loads would be desirable.

US 5858133 relates to an aluminum-alloy article such as a fastener prepared by providing an aluminum-alloy article precursor that is not in its final heat-treated state, and in one form is in its solution treated/annealed state. A curable organic coating material is also provided. The method includes anodizing the article precursor, preferably in chromic acid solution and without chemical sealing during anodizing, applying the organic coating material to the aluminum-alloy article precursor, and precipitation heat-treating the coated aluminum article precursor to its final heat-treated state, thereby simultaneously curing the organic coating. If the aluminum alloy temper is of the naturally aging type, it is optionally lightly deformed prior to precipitation treatment aging. The approach may also be applied to articles that are not solution treated/annealed and aged, by first overly deforming the article precursor so that the curing treatment of the coating also partially anneals the article precursor to the final desired deformation state.

EP 2947015 relates to a fastener system for composite structure providing electromagnetic energy protection which has a shank with a threaded portion on a first end of the shank terminating in a lead-in portion. A head is present on a second end of the shank. The shank is adapted for intimate conductive contact with an inner surface of an interference fit hole.

### SUMMARY

The subject matter disclosed in some detail below is directed to a method for treating surfaces of fasteners made of titanium alloy or corrosion-resistant steel using a sol-gel pretreatment process prior to the application of an aluminum pigment coating. (The term "sol-gel", a contraction of solution-gelation, refers to a series of reactions where a soluble metal species (typically a metal alkoxide or metal salt) hydrolyzes to form a metal hydroxide.) The sol-gel pretreatment process can be used instead of grit-blasting or etching. The sol-gel pretreatment process aids in improving adhesion and surface roughness when fasteners are used in interference fit conditions (i.e., the hole diameter is smaller than the fastener shank diameter).

In accordance with some embodiments, a surface (e.g., a shank surface) of an interference fit fastener is treated so that at least a portion of that surface has solid lubricant adhered thereto with sufficient adhesive strength to withstand the forces exerted on the solid lubricant during insertion of the fastener into a hole with interference fit. In accordance with the embodiments disclosed below, the enhanced adhesive strength is due to the formation of an interface film between the fastener surface and the layer of solid lubricant, which interface film is formed on the fastener surface using a sol-gel process. The sol-gel process improves the adhesion between the solid lubricant (e.g., an aluminum pigmented coating) that coats a surface of the interference fit fastener (e.g., a bolt or a pin) and improves the surface roughness of the fastener.

The sol-gel process is a method for producing solid materials from small molecules. In the sol-gel process, a solution forms a gel-like diphasic system containing liquid and solid phases. In accordance with one embodiment, the morphology of the gel-like diphasic system is a continuous polymer network. More specifically, the fastener surface is treated by applying a liquid sol-gel layer. The sol-gel layer is then allowed to form a thin xerogel interface film through loss of solvent (e.g., water). (As used herein, the term "xerogel" is a solid formed from a gel by drying with unhindered shrinkage.) The sol-gel process is attended by a decrease in porosity of the layer as it forms the interface film. The eventual thickness, porosity and surface area of the xerogel interface film may be controlled through judicious selection of solvent system, concentration, viscosity and thickness of the sol-gel layer.

In accordance with the embodiments disclosed herein, the interface film is an organometallic-based network system. In accordance with one embodiment, the starting solution is an aqueous-based solution with about 2% solids, containing an epoxy-functional silane (e.g., 3-glycidoxypropyltrimethoxysilane) and an organometallic chemical compound (e.g., zirconium butoxide).

As used herein, the term "colloidal material" means material in the form of a colloid. The term "colloid" identifies a broad range of solid-liquid (and/or liquid-liquid) mixtures, all of which contain distinct solid (and/or liquid) particles which are dispersed to various degrees in a liquid medium. The term is specific to the size of the individual particles, which are larger than atomic dimensions but small enough to exhibit Brownian motion.

Although various embodiments of methods for treating a surface of an interference fit fastener will be described in some detail below, one or more of those embodiments may be characterized by one or more of the following aspects.

One aspect of the subject matter disclosed in detail below is a fastener surface treatment method comprising the following steps: (a) applying a pre-gel solution on a surface of the fastener, which pre-gel solution is capable of converting into colloidal material (i.e., a xerogel interface film), which colloidal material in turn is capable of converting into an interface film (e.g., a thin interface film) upon removal of liquid solvent from the solution, wherein the interface film comprises an organometallic-based network system, where a starting solution comprising an epoxy-functional silane and an organometallic chemical compound is utilized; (b) allowing the colloidal material to cure either at room temperature or at a higher temperature (produced by heating the fastener in an oven); (c) after the colloidal material has cured, applying a coating material on top of the colloidal material over at least a portion of a surface of a shank of the fastener, wherein the coating material comprises a metal powder dissolved in liquid solvent; and (d) curing the coating material to form a solid coating that is adhered to the fastener by means of the interface film. In accordance with one embodiment of the foregoing method, the organometallic-based network system further comprises a corrosion inhibitor, while the metal powder in the coating material comprises aluminum particles.

Another example of the subject matter disclosed herein is a method for fastening a first structure having a first hole and a second structure having a second hole, the first and second holes having a same hole diameter, comprising: (a) applying a pre-gel solution on a surface of a fastener, which pre-gel solution is capable of converting into colloidal material, which colloidal material in turn is capable of converting into an interface film upon removal of liquid solvent from the solution, wherein the fastener comprises a head, a shank and a mating portion, the shank having a shank diameter greater than the hole diameter, and the interface film comprises an organometallic-based network system; (b) applying a coating material on at least a portion of a surface of the shank of the fastener after step (a) has been completed, wherein the coating material comprises a metal powder dissolved in liquid solvent; (c) curing the coating material to form a solid coating that is adhered to the fastener by means of the interface film; (d placing the first and second structures together with the first and second holes aligned; (e) forcing the fastener into and through the aligned holes of the first and second structures until the mating portion projects beyond the second structure, in which position the shank is in contact with the first and second holes; and (f) coupling a mating part to the mating portion of the fastener.

A further aspect is an assembly comprising: a first structural element having a first hole; a second structural element having a second hole aligned with the first hole of the first structural element, the first and second holes having a same hole diameter; a fastener made of titanium alloy or corrosion-resistant steel and comprising a head, a shank having an outer diameter greater than the hole diameter, and a mating portion comprising external projections, wherein the shank occupies at least respective portions of the first and second holes in the first and second structural elements without a surrounding sleeve, and the mating portion extends beyond the second structural element; a solid coating that is adhered to at least a portion of the shank of the fastener by means of an interface film formed using a sol-gel process, wherein the solid coating comprises aluminum and the interface film comprises an organometallic-based network system, where a starting solution comprising an epoxy-functional silane and an organometallic chemical compound is utilized; and a mating part that abuts the second structural element and is coupled to the mating portion of the fastener. The interface film is applied on a surface of the shank of the fastener using a sol-gel process.

In accordance with another embodiment of the assembly described in the preceding paragraph, the solid coating covers first and second longitudinal stripe-shaped surface areas on the shank to form first and second longitudinal stripes of solid coating having an uncoated longitudinal stripe-shaped surface area on the shank disposed therebetween.

Other aspects of improved interference fit fasteners coated with solid lubricant material having improved adhesive strength are disclosed below.

### BRIEF DESCRIPTION OF THE DRAWINGS

The features, functions and advantages discussed in the preceding section can be achieved independently in various embodiments or may be combined in yet other embodiments. Various embodiments will be hereinafter described with reference to drawings for the purpose of illustrating the above-described and other aspects.
FIG. 1 is a diagram representing a partially sectioned view of an interference fit fastener having a continuously coated shank in accordance with one embodiment.
FIG. 2 is a diagram representing a longitudinal cross-sectional view of a portion of a fastener shank having a surface treatment in accordance with one embodiment.
FIG. 3 is a diagram representing a partially sectioned view of an assembly comprising composite and metallic structures gripped by a sleeveless interference fit fastener assembly in accordance with one embodiment, which fastener assembly comprises an interference fit fastener of the type depicted in FIG. 1.
FIG. 4 is a block diagram identifying steps of a method for treating a surface of a fastener in accordance with one embodiment.
FIG. 5 is a diagram representing a partially sectioned view of an interference fit fastener having a discontinuously coated shank in accordance with one embodiment.

Reference will hereinafter be made to the drawings in which similar elements in different drawings bear the same reference numerals.

### DETAILED DESCRIPTION

Various embodiments of an interference fit fastener will now be described in detail for the purpose of illustration. At least some of the details disclosed below relate to optional features or aspects, which in some applications may be omitted without departing from the scope of the claims appended hereto.

In particular, illustrative embodiments of interference fit fasteners for attaching two structures to each other are described in some detail below. In the examples given below, one of the structures is made of metallic material (e.g., a metal alloy) and the other structure is made of composite material (e.g., fiber-reinforced plastic). However, in alternative examples, both structures can be made of composite material or both structures can be made of metallic material. In addition, it should be appreciated that the concept disclosed herein also has application in the attachment of three or more structures together. Each interference fit fastener comprises a head, a shank and a mating portion having external projections. In accordance with some embodiments, the interference fit fastener further comprises a tapered lead-in section between the shank and the mating portion. This tapered lead-in geometry decreases installation forces in interference fit holes by promoting gradual compression of material as the bolt is pushed through the structures to be fastened. However, it should be appreciated that the adhesive strength-enhancing process disclosed herein may also be applied in the surface treatment of interference fit fasteners which do not have lead-in sections of the type described herein.

In accordance with some embodiments, the fastener comprises a bolt and the mating part comprises a nut having internal threads that are interengaged with the external projections of the mating portion of the bolt. In accordance with other embodiments, the fastener comprises a pin and the mating part comprises a collar that is interengaged with the external projections of the mating portion of the pin.

As used herein, the category "mating parts" comprises internally threaded nuts and collars and swaged collars. As used herein, the category "fasteners" comprises bolts and pins. As used herein, the term "external projections" should be construed broadly to encompass at least the following types: (1) external threads and (2) external annular rings. Examples of fasteners having externals threads are described below. However, the concepts disclosed and claimed herein also have application to interference fit fasteners having external annular rings.

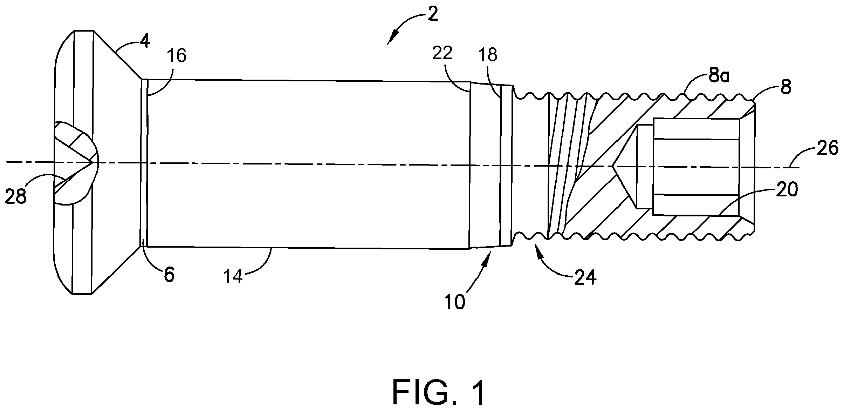

FIG. 1 is a diagram representing a partially sectioned view of an interference fit fastener in the form of a bolt 2 made of titanium alloy or corrosion-resistant steel. The bolt 2 comprises a head 4 designed to be countersunk into the structure and a shank 6 extending from the head 4. The head 4 has a drill center dimple 28. The shank 6 comprises an external surface that is circular cylindrical. The bolt 2 further comprises a mating portion 8 comprising external threads 8a. In addition, the mating portion 8 of bolt 2 has a hexagonal recess 20, in which an Allen key can be inserted during installation to hold the bolt 2 in place while a mating part is rotated about the external threads 8a. The dimensions of bolt 2 will vary depending on the thicknesses of the structures being fastened together and the diameters of the aligned holes in those structures.

To facilitate bolt insertion into a hole with an interference fit, the shank 6 is connected to a linearly tapered lead-in section 10. As previously mentioned, the surface of shank 6 is circular cylindrical. In contrast, the surface of the linearly tapered lead-in section 10 is conical and extends from a minimum diameter to a maximum diameter. The surfaces of the shank 6 and linearly tapered lead-in section 10 meet at an intersection 22 which is circular, the diameter of that circle being equal to the diameter of the shank surface and equal to the maximum diameter of the surface of the linearly tapered lead-in section 10. The linearly tapered lead-in geometry of the linearly tapered lead-in section 10 promotes gradual compression of material as the bolt 2 is pushed through the structures to be fastened. In alternative embodiments, the tapered lead-in section can have a radiused (i.e., arc-shaped) profile instead of a linear (i.e., straight) profile.

To further facilitate bolt insertion into a hole, at least portions of the surfaces of the shank 6 and the linearly tapered lead-in section 10 can be provided with a coating that has lubricant properties. FIG. 1 shows such a lubricant coating in the form of an aluminum pigmented coating 14. In the example depicted in FIG. 1, the aluminum pigmented coating 14 covers at least a portion of the surface of shank 6 (starting at boundary 16) and at least a portion of the linearly tapered lead-in section 10 (starting at boundary 18), including intersection 22. The aluminum pigmented coating 14 covers the portion of the circular cylindrical surface of shank 6 around the entire circumference of shank 6 from boundary 16 to the intersection 22 and the portion of the conical surface of linearly tapered lead-in section 10 around its entire circumference from boundary 18 to intersection of shank 6 with linearly tapered lead-in section 10. The aluminum pigmented coating 14 is preferably formulated to prevent galvanic corrosion and to provide lubrication during insertion of the fastener into a hole with an interference fit. In alternative embodiments, the aluminum pigmented coating 14 can be applied discontinuously around the circumference of the shank 6.

As previously mentioned, bolt 2 is made of titanium alloy or corrosion-resistant steel. Aluminum pigment coatings typically adhere to fasteners made of titanium alloy or corrosion-resistant steel with less than optimal adhesive strength. To increase the adhesive strength, the aluminum pigmented coating 14 is adhered to the surface of the fastener by means of an interface film (not visible in FIG. 1) that is applied using a sol-gel process. The following U.S. patents disclose sol-gel processes: 5,789,085, 5,814,137, 5,849,110, 5,869,140, 5,939,197 and 6,037,060. A suitable sol-gel system is AC-130-2 commercially available from 3M Company, Garden Grove, CA, U.S.A.

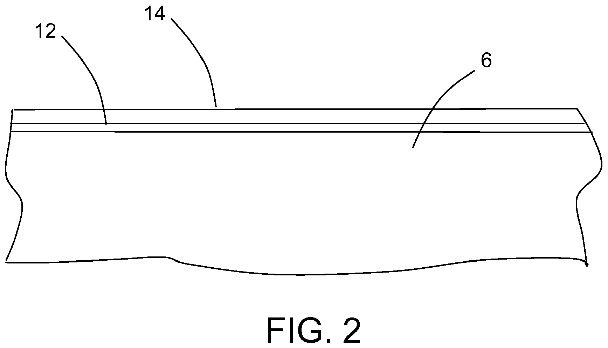

FIG. 2 is a diagram representing a longitudinal cross-sectional view of a portion of shank 6 having a surface treatment in accordance with one embodiment. The surface treatment comprises an interface film 12 adhered directly to the circular cylindrical surface of shank 6 and an aluminum pigmented coating 14 adhered indirectly to at least a portion of the shank surface by means of the interface film 12. In other words, the aluminum pigmented coating 14 is adhered to the interface film 12, which is in turn adhered to the surface of shank 6. In FIG. 2, the thickness of the film 12 and coating 14 is exaggerated so that they are visible. Hatching has not been used in FIG. 2 in order to not obscure the material layers applied on the surface of shank 6.

In accordance with the embodiments disclosed herein, the interface film is an organometallic-based network system. In accordance with one embodiment, the starting solution is an aqueous-based solution with about 2% solids, containing an epoxy-functional silane (e.g., 3-glycidoxypropyltrimethoxysilane) and an organometallic chemical compound (e.g., zirconium butoxide). The resulting interface film is a mixed Zr/Si oxide system. In addition, a corrosion inhibitor (such as inhibitors derived from rare earth salts or thiol) can be included in the starting solution.

In accordance with some embodiments, the interface film 12 covers the entire surface of the bolt 2. The portion of interface film 12 that covers the head 4 of bolt 2 will produce better paint adhesion in cases where the head 4 is to be painted. The portion of interface film 12 that covers the mating portion 8 of bolt 2 will provide further corrosion protection. The portion of interface film 12 that covers the shank 6 and optionally a portion of the linearly tapered lead-in section 10 of bolt 2 will enable the aluminum pigmented coating 14 to effectively adhere to the surface of bolt 2 with enhanced adhesive strength.

After the interface film 12 has been applied to the fastener, the aluminum pigmented coating 14 is applied on top of at least a portion of the interface film 12. Any suitable approach, such as dipping, spraying, or brushing, can be used. In accordance with one approach, the solution of coating material is sprayed onto the fastener pre-treated with interface film. Much of solvent is removed from the as-applied coating material by drying or flash curing, either at ambient or slightly elevated temperature, for a relatively short period of time, so that the coated fastener is dry to the touch for handling purposes. The coated fastener is however not suitable for service at this point, because the aluminum pigmented coating 14 is not sufficiently adherent to the alloy base metal and because the coating itself is not sufficiently coherent to resist mechanical damage that may occur in service. The aluminum pigmented coating 14 is subsequently and properly cured at elevated temperature for a period of time. On fasteners made of titanium alloy or corrosion-resistant steel, the coating material preferably has a thickness of 0.0002-0.0005 inch after curing. After curing, a supplemental lubricant such as cetyl alcohol may be applied to the entire fastener. Supplemental lubricant is applied to the coated fastener by a dipping process. After the dipping process, the fastener is subsequently and properly cured either at room temperature or slightly elevated temperature, to remove the solvent and allow for handling.

A wide variety of curable organic coating materials containing aluminum are available. A typical and preferred curable organic coating material has phenolic resin mixed with one or more plasticizers, other organic components such as polytetrafluoroethylene, and inorganic additives such as aluminum powder. These coating components are preferably dissolved in a suitable solvent present in an amount to produce a desired application consistency. In accordance with some embodiments, the coating material is dissolved in a solvent that is a mixture of ethanol, toluene, and methyl ethyl ketone. A typical sprayable coating solution has about 30 wt.% ethanol, about 7 wt.% toluene, and about 45 wt.% methyl ethyl ketone as the solvent; and about 2 wt.% strontium chromate, about 2 wt.% aluminum powder, with the balance being phenolic resin and plasticizer as the coating material. A small amount of polytetrafluoroethylene may optionally be added. One suitable coating is HI-KOTE™ 1, which is commercially available from LISI Aerospace. The HI-KOTE™ 1 coating material is typically cured at an elevated temperature between 350-450°F (177-232°C) for 1 hour to 4 hours. U.S. Patent No. 7,655,320 disclosed the results of an analysis of an as-sprayed HI-KOTE™ 1 coating. The heavier elements were present in the following amounts by weight: Al, 82.4%; Cr, 2.9%; Fe, 0.1%; Zn, 0.7%; and Sr, 13.9%. However, the formulation of HI-KOTE™ 1 coatings has changed over time as chromates have been replaced with environmentally friendly alternatives.

A coated interference fit fastener such as bolt 2 (seen in FIG. 1) can be used to fasten a first structure having a first hole and a second structure having a second hole, the first and second holes having the same diameter. In accordance with one embodiment, the method comprises the following steps: placing the first and second structures together with the first and second holes aligned; inserting a mating portion 8 of bolt 2 into the hole in the first structure until an edge of the hole in the first structure is in contact with and surrounds the tapered lead-in section 10; and forcing the bolt 2 further into the aligned holes of the first and second structures to cause the shank 6 to contact the edge of the hole in the first structure, push through the hole in the first structure, and then push through the hole in the second structure until the mating portion 8 of bolt 2 projects beyond the second structure; and coupling a mating part to the mating portion 8 of bolt 2.

During installation, a manual rivet gun or automated system can be used to hammer the bolt 2 into aligned holes of the structures to be fastened. In accordance with one embodiment, the tapered lead-in section 10 tapers gradually toward the mating portion 8 and has a taper angle equal to or less than 20 degrees, while the shank 6 is circular cylindrical and has a diameter greater than the diameter of the first and second holes. It is customary to define the "amount of interference" as being equal to one-half of the difference between the shank diameter and the hole diameter.

In accordance with one embodiment, the tapered lead-in section 10 has a maximum diameter equal to the diameter of shank 6 and a minimum diameter which is less than the diameters of the first and second holes. The bolt 2 will be pushed into the aligned interference holes of the structures to be fastened until the mating portion 8 projects beyond the last structure. As previously mentioned, the geometry of the tapered lead-in section 10 promotes gradual compression of material in the first and second structures as the bolt 2 is pushed through. A mating part (not shown in FIG. 1) is then placed onto the mating portion 8 of bolt 2 with a specified clamping force. In some cases, the mating part may take the form of a nut having an opening with internal threads and a non-circular wrenching surface (e.g., hexagonal) designed to be engaged by a wrench or similar tool. It should be appreciated, however, that a variety of collars and nuts are compatible with the fasteners disclosed herein.

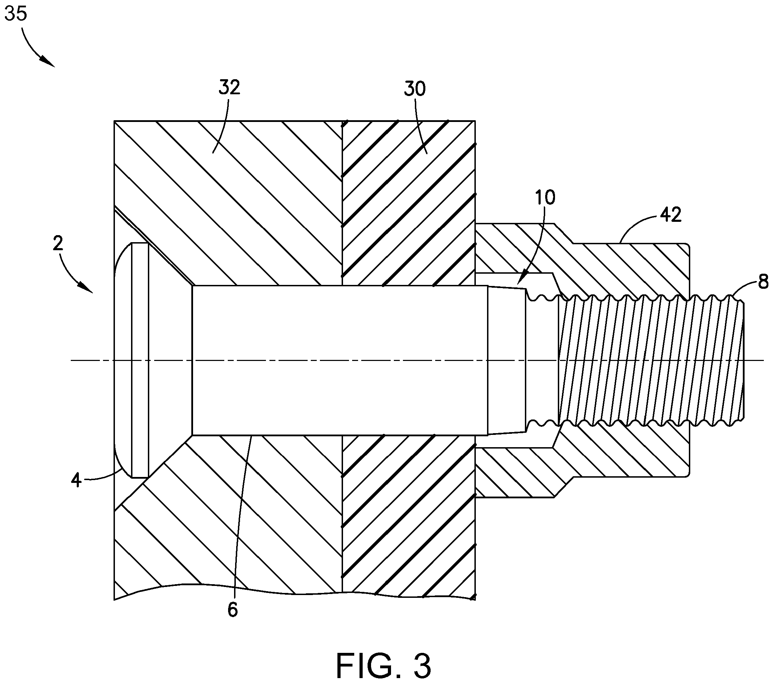

The bolt installation process described in the preceding paragraph can be used to fasten structures made of similar or different materials. For example, FIG. 3 is a diagram representing a partially sectioned view of an assembly 35 comprising a composite structure 30 and a metallic structure 32 (referred to below as the "joint structure") fastened together by a sleeveless interference fit fastener assembly. This fastener assembly 35 comprises a bolt 2 of the type depicted in FIG. 1 and a nut 42 that is interengaged with the mating portion 8 of bolt 2. In alternative embodiments, the bolt 2 may have external annular rings instead of external threads, while the mating part is a swaged collar instead of an internally threaded nut. Although FIG. 3 depicts a bolt 2 having a countersunk (i.e., flush) head 4, bolt 2 may in the alternative have a protruding head.

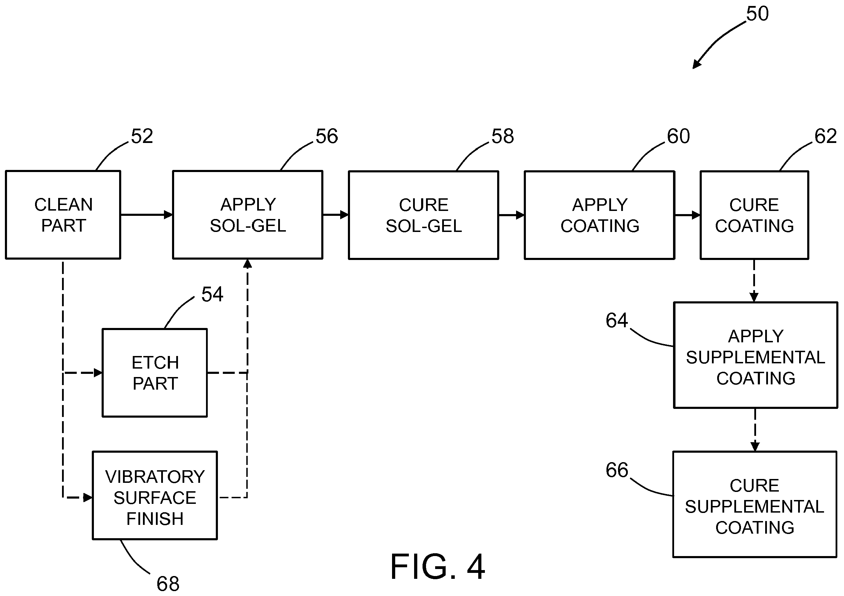

FIG. 4 is a block diagram identifying steps of a method 50 for treating the shank surface to achieve the coated fastener which is partially depicted in FIG. 2. First, the fastener is cleaned in a degreaser solution (step 52) to remove residual oil from the grinding process. In accordance with one embodiment, an interface film is then applied over the entire surface of the clean fastener using a sol-gel process. This sol-gel process comprises applying a pre-gel solution on a surface of the fastener (step 56), which pre-gel solution is capable of converting into colloidal material (i.e., a xerogel interface film), which colloidal material in turn is capable of converting into an interface film (e.g., a thin interface film) upon removal of liquid solvent from the solution. The pre-gel solution may be applied by dipping the fastener in a receptacle containing a volume of pre-gel solution. In accordance with the embodiment depicted in FIG. 4, this sol-gel process further comprises curing the colloidal material (step 58) at an elevated temperature (i.e., higher than room temperature), for example by heating the fastener with applied solution in an oven. In alternative embodiments, the colloidal material may be cured at room temperature.

Optionally, the surface of the fastener can be etched in an acid solution (pH 6 or less) (step 54) or refined using chemically accelerated vibratory finishing (step 68) subsequent to cleaning (step 52) and prior to applying the pre-gel solution (step 56). The optionality of the etching step 54 and the vibratory finishing step 68 are indicated by dashed arrows in FIG. 4. In the case of etching, the acid solution may contain either fluoric or chloric acid. In the case of vibratory finishing, specialized chemicals are used to form a conversion coating which actively binds to the metallic surface of the fastener and then the random motion of a non-abrasive media facilitates removal of the conversion coating along with metal, while smoothing and texturing the metallic surface.

All of steps 52, 54, 56 and 58 can be performed concurrently on a multiplicity of fasteners, for example, by placing the multiplicity of fasteners in a basket (not shown), dipping the basket into various baths (for cleaning step 52, etching step 54 and applying pre-gel solution step 56), and then placing the basket in an oven (for curing step 58). Vibratory finishing can be performed concurrently on a multiplicity of fasteners using technology commercially available from REM Chemicals Inc., Southington, Connecticut.

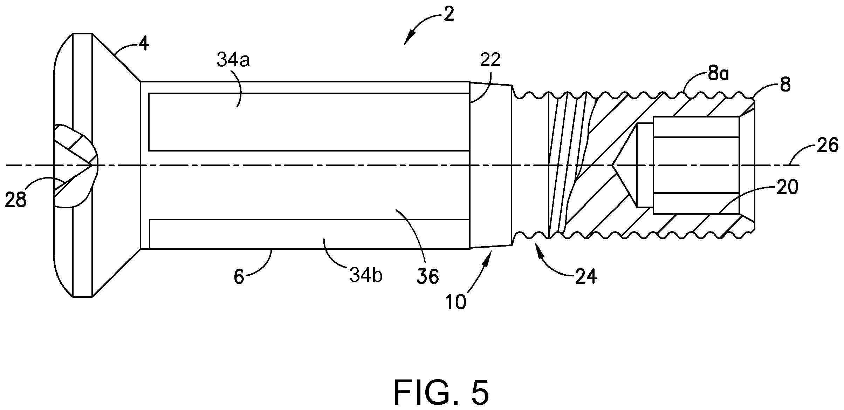

After the colloidal material has cured, an aluminum pigmented coating material is applied on top of the colloidal material (step 60) over at least a portion of a surface of shank 6 of the fastener. The coating material comprises aluminum powder dissolved in liquid solvent. In alternative embodiments, the coating material may comprise other metal powder dissolved in liquid solvent. The coating material may be applied by spraying it onto at least a portion of the surface of the shank. For example, the coating material may be applied continuously or discontinuously (see FIG. 5) around the outer circumference of the shank 6. Following step 60, the coating material is cured (step 62) to form a solid coating (e.g., aluminum pigmented coating 14 seen in FIG. 2) that is adhered to the fastener by means of the interface film 12 which was formed using the sol-gel process. Optionally, a supplemental lubricant may be applied to the entire fastener (step 64) and then cured (step 66) as previously described.

FIG. 5 is a diagram representing a partially sectioned view of a bolt 2 having a discontinuously coated shank 6 in accordance with one embodiment. In this example, the aluminum pigmented coating 14 covers first through fourth longitudinal stripe-shaped surface areas on the shank to form four longitudinal stripes of coating having uncoated longitudinal stripe-shaped surface areas disposed therebetween. Only a first longitudinal stripe 34a of coating material and a portion of a second longitudinal stripe 34b of coating material are visible in FIG. 5. Each longitudinal stripe of coating material extends to the intersection 22 where the shank 6 meets the linearly tapered lead-in section 10. The coating material may be applied on the shank 6 by spraying or brushing. Such discontinuous application of the aluminum pigmented coating material enables the uncoated areas of the bolt 2 to support lightning strike protection for composite structure.

The preferred bolts are manufactured from any one of several titanium alloys or corrosion-resistant stainless steel alloys. As used herein, the term "corrosion-resistant steel" means that the metallic material is an austenitic, martensitic, or ferritic stainless steel. Although the aerospace industry uses fasteners made from all types of stainless steels, the 300 series austenitic types are most widely used in the fabrication of components or fasteners. The alloys in this austenitic group have at least 8% nickel in addition to chromium. They offer a greater degree of corrosion resistance than the martensitic and ferritic types, but less resistance to chloride stress-corrosion cracking. Martensitic and ferritic stainless steels contain at least 12% chromium, but contain little or no nickel because it stabilizes austenite. Martensitic grades, such as Types 410 and 416, are magnetic and can be hardened by heat treatment. Ferritic alloys, such as Type 430, are also magnetic but generally cannot be hardened by heat treatment, but rather develop maximum ductility, toughness, and corrosion resistance in the annealed and quenched condition. Therefore, the only heat treatment applied to the ferritic alloys is annealing.

While interference fit fasteners having shanks at least partially coated with solid lubricant material have been described with reference to various embodiments, it will be understood by those skilled in the art that various changes may be made and equivalents may be substituted for elements thereof without departing from the scope of the claims set forth hereinafter. In addition, many modifications may be made to adapt the teachings herein to a particular situation without departing from the scope of the claims.

Furthermore, the surface treatment process disclosed herein is not limited in its application to fasteners and instead is more broadly applicable. More specifically, the surface treatment disclosed herein may be applied to screws, bolts, lockbolts, pins, rivets, etc., which may have external threads or grooves (i.e., annular rings), as well as female mating components such as nuts, lock washers, collars, etc.

## Claims

1. A method (50) for treating a surface of a fastener (2), comprising:
(a) forming an interface film (12) using a sol-gel process by applying a pre-gel solution on a surface of the fastener (2), which pre-gel solution is capable of converting into colloidal material, which colloidal material in turn is capable of converting into an interface film (12) upon removal of liquid solvent from the solution, wherein the interface film (12) comprises an organometallic-based network system, where a starting solution comprising an epoxy-functional silane and an organometallic chemical compound is utilized;
(b) applying (60) a coating material (14) on at least a portion of a surface of a shank (6) of the fastener (2) after step (a) has been completed, wherein the coating material (14) comprises a metal powder dissolved in liquid solvent; and
(c) curing (62) the coating material (14) to form a solid coating that is adhered to the fastener (2) by means of the interface film (12).

2. The method (50) as recited in claim 1, further comprising heating the solution to remove liquid solvent from the solution after step (a) and before step (b).

3. The method (50) as recited in claim 1 or 2, wherein step (c) comprises heating the fastener (2) in an oven.

4. The method (50) as recited in claim 1, 2 or 3, wherein step (b) comprises applying the coating material (14) continuously around a circumference of a surface of the shank (6).

5. The method (50) as recited in any of claims 1 to 3, wherein step (b) comprises applying the coating material (14) on first and second longitudinal stripe-shaped surface areas on the shank (6) to form first and second longitudinal stripes (34a, 34b) of coating material (14) having a coating material-free longitudinal stripe-shaped surface area on the shank (6) disposed between the first and second longitudinal stripes of coating material.

6. The method (50) as recited in any of claims 1 to 5, wherein the epoxy-functional silane is 3-glycidoxypropyltrimethoxysilane and organometallic chemical compound is zirconium butoxide.

7. The method (50) as recited in claim 6, wherein the organometallic-based network system further comprises a corrosion inhibitor.

8. The method (50) as recited in any of claims 1 to 7, wherein step (a) comprises dipping the fastener in a receptacle containing a volume of pre-gel solution, and step (b) comprises spraying the coating material (14) onto the fastener.

9. The method (50) as recited in any of claims 1 to 8, further comprising etching (54) the surface of the fastener before performing step (a).

10. The method (50) as recited in any of claims 1 to 9, further comprising dipping (64) the fastener in a receptacle containing a volume of supplemental lubricant after step (c) and subsequently curing (66) the supplemental lubricant.

11. An assembly (35) comprising:
a first structural element (32) having a first hole;
a second structural element (30) having a second hole aligned with the first hole of the first structural element, the first and second holes having a same hole diameter;
a fastener (2) made of titanium alloy or corrosion-resistant steel and comprising a head (4), a shank (6) having an outer diameter greater than the hole diameter, and a mating portion (8) comprising external projections, wherein the shank (6) occupies at least respective portions of the first and second holes in the first and second structural elements (32, 30), and the mating portion (8) extends beyond the second structural element (30);
a solid coating (14) that is adhered to at least a portion of the shank (6) of the fastener (2) by means of an interface film (12) formed using a sol-gel process, wherein the solid coating (14) comprises aluminum and the interface film (12) comprises an organometallic-based network system, where a starting solution comprising an epoxy-functional silane and an organometallic chemical compound is utilized; and
a mating part (42) that abuts the second structural element (30) and is coupled to the mating portion (8) of the fastener (2).

12. The assembly (35) as recited in claim 11, wherein the epoxy-functional silane is 3-glycidoxypropyltrimethoxysilane and the organometallic chemical compound is zirconium butoxide.

13. The assembly (35) as recited in claim 12, wherein the organometallic-based network system further comprises a corrosion inhibitor.

14. The assembly (35) as recited in claim 11, 12, or 13, wherein the solid coating (14) covers first and second longitudinal stripe-shaped surface areas on the shank (6) to form first and second longitudinal stripes (34a, 34b) of solid coating (14) having an uncoated longitudinal stripe-shaped surface area on the shank (6) disposed therebetween.

15. The assembly (35) as recited in claim any of claims 11 to 14, wherein the fastener (2) further comprises a lead-in section (10) disposed between the shank (6) and the mating portion (8), and the solid coating (14) covers at least a portion of a surface of the lead-in section (10).

## Patentansprüche

1. Verfahren (50) zum Behandeln einer Oberfläche eines Befestigungsmittels (2), das aufweist:
(a) Bilden eines Zwischenschichtfilms (12) unter Verwendung eines Sol-Gel-Prozesses durch Applizieren einer Vor-Gel-Lösung auf einer Oberfläche des Befestigungsmittels (2), wobei die Vor-Gel-Lösung dazu in der Lage ist, sich in Kolloidmaterial umzuwandeln, welches wieder um in der Lage ist, sich nach Entfernen eines flüssigen Lösungsmittels aus der Lösung in einen Zwischenschichtfilm (12) umzuwandeln, wobei der Zwischenschichtfilm (12) ein organometallbasiertes Netzsystem aufweist, wobei eine Ansatzlösung verwendet wird, die ein epoxyfunktionelles Silan und eine organometallische chemische Verbindung aufweist;
(b) Applizieren (60) eines Beschichtungsmaterials (14) auf wenigstens einem Abschnitt einer Oberfläche eines Schafts (6) des Befestigungsmittels (2), nachdem Schritt (a) durchgeführt worden ist, wobei das Beschichtungsmaterial (14) ein Metallpulver aufweist, das in flüssigem Lösungsmittel aufgelöst ist; und
(c) Härten (62) des Beschichtungsmaterials (14), um eine feste Beschichtung zu bilden, die mittels des Zwischenschichtfilms (12) an dem Befestigungsmittel (2) befestigt wird.

2. Verfahren (50) nach Anspruch 1, das des Weiteren das Erhitzen der Lösung aufweist, um flüssiges Lösungsmittel aus der Lösung zu entfernen, nach Schritt (a) und vor Schritt (b).

3. Verfahren (50) nach Anspruch 1 oder 2, wobei Schritt (c) das Erhitzen des Befestigungsmittels (2) in einem Ofen aufweist.

4. Verfahren (50) nach Anspruch 1, 2 oder 3, wobei Schritt (b) das kontinuierliche Applizieren des Beschichtungsmaterials (14) um einen Umfang einer Oberfläche des Schafts (6) herum aufweist.

5. Verfahren (50) nach einem der Ansprüche 1 bis 3, wobei Schritt (b) das Applizieren des Beschichtungsmaterials (14) auf ersten und zweiten länglichen streifenförmigen Oberflächenbereichen auf dem Schaft (6) aufweist, um erste und zweite längliche Streifen (34a, 34b) von Beschichtungsmaterial (14) herzustellen, mit einem beschichtungsmaterialfreien länglichen streifenförmigen Oberflächenbereich auf dem Schaft (6), der zwischen den ersten und zweiten länglichen Streifen von Beschichtungsmaterial angeordnet ist.

6. Verfahren (50) nach einem der Ansprüche 1 bis 5, wobei das epoxyfunktionelle Silan 3-Glycidoxypropyltrimethoxysilan ist und die organometallische chemische Verbindung Zirkonium Butoxid ist.

7. Verfahren (50) nach Anspruch 6, wobei das organometallbasierte Netzsystem des Weiteren einen Korrosionshemmer aufweist.

8. Verfahren (50) nach einem der Ansprüche 1 bis 7, wobei Schritt (a) das Tauchen des Befestigungsmittels in einen Behälter aufweist, der ein Volumen von Vor-Gel-Lösung enthält, und Schritt (b) das Sprühen des Beschichtungsmaterials (14) auf das Befestigungsmittel aufweist.

9. Verfahren (50) nach einem der Ansprüche 1 bis 8, das des Weiteren das Ätzen (54) der Oberfläche des Befestigungsmittels vor dem Durchführen von Schritt (a) aufweist.

10. Verfahren (50) nach einem der Ansprüche 1 bis 9, das des Weiteren nach Schritt (c) das Tauchen (64) des Befestigungsmittels in einen Behälter aufweist, der ein Volumen von zusätzlichem Schmiermittel aufweist, und nachfolgend das Härten (66) des zusätzlichen Schmiermittels.

11. Anordnung (35), die aufweist:
ein erstes Bauteil (32), das ein erstes Loch hat;
ein zweites Bauteil (30), das ein zweites Loch hat, welches mit dem ersten Loch des ersten Bauteils ausgerichtet ist, wobei das erste und das zweite Loch den gleichen Lochdurchmesser haben;
ein Befestigungsmittel (2) aus Titanlegierung oder korrosionsbeständigem Stahl, das einen Kopf (4), einen Schaft (6) mit einem Außendurchmesser, der größer als der Lochdurchmesser ist, und ein Gegenstück (8), das externe Vorsprünge hat, aufweist, wobei der Schaft (6) wenigstens entsprechende Abschnitte der ersten und zweiten Löcher in den ersten und zweiten Bauteilen (32, 30) einnimmt und das Gegenstück (8) sich über das zweite Bauteil (30) hinaus erstreckt;
eine feste Beschichtung (14), die an wenigstens einem Abschnitt des Schafts (6) des Befestigungsmittels (2) durch einen Zwischenschichtfilm (12) befestigt ist, der unter Verwendung eines Sol-Gel-Prozesses hergestellt wird, wobei die feste Beschichtung (14) Aluminium aufweist und der Zwischenschichtfilm (12) ein organometallbasiertes Netzsystem aufweist, wobei eine Ansatzlösung verwendet wird, die ein epoxyfunktionelles Silan und eine organometallische chemische Verbindung aufweist; und
ein Gegenstück (42), das an dem zweiten Bauteil (30) anschlägt und mit dem Gegenstück (8) des Befestigungsmittels (2) verbunden ist.

12. Anordnung (35) nach Anspruch 11, wobei das epoxyfunktionelle Silan 3-Glycidoxypropyltrimethoxysilan ist und die organometallische chemische Verbindung Zirkonium Butoxid ist.

13. Anordnung (35) nach Anspruch 12, wobei das organometallbasierte Netzsystem des Weiteren einen Korrosionshemmer aufweist.

14. Anordnung (35) nach Anspruch 11, 12 oder 13, wobei die feste Beschichtung (14) erste und zweite längliche streifenförmige Oberflächenbereiche auf dem Schaft (6) bedeckt, um erste und zweite längliche Streifen (34a, 34b) von fester Beschichtung (14) zu bilden, mit einem dazwischen angeordneten unbeschichteten länglichen streifenförmigen Oberflächenbereich auf dem Schaft (6).

15. Anordnung (35) nach einem der Ansprüche 11 bis 14, wobei das Befestigungsmittel (2) des Weiteren einen Einführabschnitt (10) aufweist, der zwischen dem Schaft (6) und dem Gegenstück (8) angeordnet ist, und die feste Beschichtung (14) wenigstens einen Abschnitt einer Oberfläche des Einführabschnitts (10) bedeckt.

## Revendications

1. Procédé (50) destiné à traiter une surface d'une pièce de fixation (2), comprenant les étapes consistant à :
(a) former un film d'interface (12) à l'aide d'une méthode sol-gel en appliquant une solution pré-gel sur une surface de la pièce de fixation (2), laquelle solution pré-gel peut être convertie en un matériau colloïdal, lequel matériau colloïdal peut à son tour être converti en un film d'interface (12) après suppression du solvant liquide de la solution, dans lequel le film d'interface (12) comprend un système de réseau à base organométallique, où une solution de départ comprenant un silane fonctionnel époxy et un composé chimique organométallique est utilisée ;
(b) appliquer (60) un matériau de revêtement (14) sur au moins une portion d'une surface d'une tige (6) de la pièce de fixation (2) une fois que l'étape (a) est terminée, dans lequel le matériau de revêtement (14) comprend une poudre de métal dissoute dans le solvant liquide ; et
(c) durcir (62) le matériau de revêtement (14) pour former un revêtement solide qui est collé à la pièce de fixation (2) à l'aide du film d'interface (12).

2. Procédé (50) selon la revendication 1, comprenant en outre l'étape consistant à chauffer la solution pour enlever le solvant liquide de la solution après l'étape (a) et avant l'étape (b).

3. Procédé (50) selon la revendication 1 ou 2, dans lequel l'étape (c) comprend le chauffage de la pièce de fixation (2) dans un four.

4. Procédé (50) selon la revendication 1, 2 ou 3, dans lequel l'étape (b) comprend l'application du matériau de revêtement (14) de manière continue autour d'une circonférence d'une surface de la tige (6).

5. Procédé (50) selon une quelconque des revendications 1 à 3, dans lequel l'étape (b) comprend l'application du matériau de revêtement (14) sur des première et seconde zones de surface en forme de bandes longitudinales sur la tige (6) pour former des première et seconde bandes longitudinales (34a, 34b) de matériau de revêtement (14) présentant une zone de surface en forme de bande longitudinale exempte de matériau de revêtement sur la tige (6) disposée entre les première et seconde bandes longitudinales de matériau de revêtement.

6. Procédé (50) selon une quelconque des revendications 1 à 5, dans lequel le silane fonctionnel époxy est un 3-glycidoxypropyltriméthoxysilane et le composé chimique organométallique est un butoxyde de zirconium.

7. Procédé (50) selon la revendication 6, dans lequel le système de réseau à base organométallique comprend en outre un inhibiteur de corrosion.

8. Procédé (50) selon une quelconque des revendications 1 à 7, dans lequel l'étape (a) comprend le trempage de la pièce de fixation dans un réceptacle contenant un volume de solution pré-gel, et l'étape (b) comprend la vaporisation du matériau de revêtement (14) sur la pièce de fixation.

9. Procédé (50) selon une quelconque des revendications 1 à 8, comprenant en outre l'étape consistant à graver (54) la surface de la pièce de fixation avant de réaliser l'étape (a).

10. Procédé (50) selon une quelconque des revendications 1 à 9, comprenant en outre les étapes consistant à tremper (64) la pièce de fixation dans un réceptacle contenant un volume de lubrifiant supplémentaire après l'étape (c) et ensuite à durcir (66) le lubrifiant supplémentaire.

11. Ensemble (35) comprenant :
un premier élément structurel (32) présentant un premier orifice ;
un second élément structurel (30) présentant un second orifice aligné avec le premier orifice du premier élément structurel, les premier et second orifices présentant un même diamètre d'orifice ;
une pièce de fixation (2) composée d'un alliage de titane ou d'un acier résistant à la corrosion et comprenant une tête (4), une tige (6) présentant un diamètre extérieur supérieur au diamètre des orifices, et une portion d'accouplement (8) comprenant des saillies externes, dans lequel la tige (6) occupe au moins des portions respectives des premier et second orifices dans les premier et second éléments structurels (32, 30), et la portion d'accouplement (8) s'étend au-delà du second élément structurel (30) ;
un revêtement solide (14) qui est collé à au moins une portion de la tige (6) de la pièce de fixation (2) à l'aide d'un film d'interface (12) formé à l'aide d'une méthode sol-gel, dans lequel le revêtement solide (14) comprend de l'aluminium et le film d'interface (12) comprend un système de réseau à base organométallique, où une solution de départ comprenant un silane fonctionnel époxy et un composé chimique organométallique est utilisée ; et
une pièce d'accouplement (42) qui vient en butée contre le second élément structurel (30) et est couplée à la portion d'accouplement (8) de la pièce de fixation (2).

12. Ensemble (35) selon la revendication 11, dans lequel le silane fonctionnel époxy est un 3-glycidoxypropyltriméthoxysilane et le composé chimique organométallique est un butoxyde de zirconium.

13. Ensemble (35) selon la revendication 12, dans lequel le système de réseau à base organométallique comprend en outre un inhibiteur de corrosion.

14. Ensemble (35) selon la revendication 11, 12, ou 13, dans lequel le revêtement solide (14) couvre des première et seconde zones de surface en forme de bandes longitudinales sur la tige (6) pour former des première et seconde bandes longitudinales (34a, 34b) de revêtement solide (14) présentant une zone de surface en forme de bande longitudinale non revêtue sur la tige (6) disposée entre celles-ci.

15. Ensemble (35) selon une quelconque des revendications 11 à 14, dans lequel la pièce de fixation (2) comprend en outre une section d'introduction (10) disposée entre la tige (6) et la portion d'accouplement (8), et le revêtement solide (14) couvre au moins une portion d'une surface de la section d'introduction (10) .
